# EUROPEAN PATENT APPLICATION

(11) **EP 2 630 857 A1**
(43) Date of publication of application: **28.08.2013**
(21) Application number: 13156188.8
(22) Date of filing: 21.02.2013
(51) Int. Cl.: A01F 15/07

(54) **Baller for branches**

(30) Priority: 24.02.2012 IT PD20120049
(71) Applicant: Valentini Antonio S.r.l., 35012 Camposampiero (PD) (IT)
(72) Inventor: Valentini, Antonio, I-35012 Camposampiero (PD) (IT)
(74) Representative: Gallo, Luca

(57) **Abstract**

Baling machine for branches, which comprises a collection group (6) of the branches mounted at the front of the frame (2) of the machine (1) and a compacting chamber (7) mounted behind the collection group to receive the sarmenta from the latter and form them into a bale.

There are gate means (9) formed from a first gate (9A) hinged to a lower portion of the frame (2) and a second gate (9B), above the first and hinged to an upper portion of the frame. The two gates (9A, 9B) are moved by first actuator means (10) between a coupling position, in which the free edges of the gates (9A, 9B) are joined to close the compacting chamber (7), and a decoupling position in which the free edges (14, 16) of the gates are spaced apart forming a passage channel (17) for the formed and bound bale to pass through.

## Description

### Field of application

The present invention refers to a baling machine for sarmenta according to the preamble of the main claim.

The machine concerned has advantageous, although not exclusive, use in the automatic collection of sarmenta after pruning in tree plantations in particular fruit trees such as vineyards and the like.

### State of the art

As known, during pruning operations in general, and in particular at the time of pruning grape vines, the cut branches are left on the ground to then be collected at the end of pruning.

The sarmenta, i.e. the pruned branches, notoriously have a very irregular and contorted configuration that makes them difficult to store in small spaces. Moreover, once they have been collected they can advantageously be used both to feed a heating system and for other purposes like for example to make pellets or to create compost.

Leaving the sarmenta on the ground can, on the other hand, lead to the formation of moulds, which are harmful to valuable harvests. Moreover, the remains after pruning can sometimes consist of branches even of substantial thickness that cannot be left standing in fields as they would hinder subsequent operations of disinfestation and collection of the fruit.

It is also known to manually collect sarmenta in an entirely manual fashion, which involves long and tiring operations.

In relatively recent times, the specific technical field of sarmenta collection has seen the introduction of baling machines of the type already used to compress fodder material, for example hay or straw, suitable for packaging the collected sarmenta in cylindrical bales.

Such known baling machines have the purpose of facilitating the operations of collecting and transporting sarmenta as well as of reducing the space intended for their storage.

Known baling machines comprise a frame, generally of the hauled type, which extends at the front with a drawbar for hooking to a tractor. The frame rests on the ground through a pair of side wheels and frontally supports a collection group. The latter can usually be actuated to move between a raised rest position (for travelling on the road) and a lowered work position. The collection group, when it is located in this last position, is a short distance from the ground to collect the sarmenta and send them, through transportation means such as a motorised roller unit, to a compacting chamber behind.

The compacting chamber is substantially cylinder-shaped with the horizontal longitudinal axis arranged transversally to the direction of travel.

In greater detail, the compacting chamber is defined by a circumferential series of corrugated rollers or, in an equivalent manner, by a plurality of belts closed in a loop on a plurality of rollers. The rollers (or the belts) define a circular path that, in operation, is suitable for pulling the sarmenta in rotation inside the compacting chamber and for compressing them until a bale of predetermined diameter is formed. The aforementioned chamber has operatively associated sensor means suitable for detecting the pressure reached inside the chamber itself, as well as a group intended to bind the mass of sarmenta that has been compacted in the form of a cylindrical bale.

The chamber is advantageously made up of a fixed lower part, and a mobile rear part having functions of a gate for discharging the compacted and bound sarmenta.

For this purpose, when the pressure indicative of the formation of the bale of sarmenta of the desired size has been reached, suitable actuator means lift the rear gate and allow the bound bale itself to come out from the compacting chamber.

All of the movements connected to the collection, transportation, compacting of sarmenta and forming of the bale are obtained through linkages connected to the power take off of a tractor through a cardan shaft.

The movement of the collection group and of the discharge gate are carried out by hydraulic actuators (pistons or motors) connected to the pressurised circuit of the tractor itself with interposition of a suitable drive distributor.

Baling machines of the type briefly indicated above are described for example in patents IT 1157807, EP 1029441, IT 1042442 and FR 2506117.

One of the drawbacks encountered in the aforementioned known baling machines is the fact that they cannot pass through the rows of fruit trees, where a rather low height is foreseen. For example, tables grapes are usually produced through so-called canopy-type vineyards, in which the canopy itself clearly separates the fruit production area located beneath the canopy that allows the bunches to ripen shaded from irradiation, from a vegetation area above the canopy.

So, the known baling machines described above cannot slip between the rows of vineyards beneath the canopy, since they have bulks that are incompatible in height and usually also in width.

Such baling machines indeed have the drawback of occupying a substantial height for the opening of the rear gate so as to allow the bale of bound sarmenta to come out; this opening of the gate is, indeed, incompatible with many fruit farms and in particular with table grape canopy farms.

The bulk in width of such known baling machines is defined by the side wheels and is usually also incompatible with the space foreseen between the rows of many fruit farms.

A further drawback of known baling machines is the fact that the group for collecting from the ground is usually unsuitable for correctly feeding the compacting chamber, especially when there are sarmenta that are formed from branches having a large diameter (for example 5-6 cm) and are particularly tough, for example belonging to recently cut fronds.

For example, patents IT 1157807 and EP 1029441 describe baling machines in which the collecting groups comprise two or more pairs of counter-rotating shafts each carrying peripherally-mounted prongs or teeth.

The latter are not able to cut green and/or substantial sized branches that are collected from the ground, generating incision points along their extension suitable for allowing their correct deformation and compression inside the compacting chamber. Consequently, known baling machines currently available on the market do not allow branches of substantial size, for example 5-6 cm in diameter, to be treated.

Patent US 3 974 632 discloses a baling machine for sarmenta comprising a collection group mounted at the front onto the frame of the machine and a compacting chamber mounted onto the frame behind the collection group to receive the sarmenta from the collection group and form them into a bale. The gate is mounted onto the frame behind the compacting chamber and comprises two gates, an upper one and a lower one, hinged to the frame and able to be actuated to take their opposite edges apart and shut together to allow the bale to come out from the compacting chamber of the collection group. On the lower gate there are motorised conveyors for the formation of the bales. Such belts are interrupted and do not continue at the upper gate. Such belts align themselves by varying their relative position when the lower gate opens, making a rectilinear conveyor belt for the expulsion of the bale that cannot otherwise be obtained with other means for forming bales like for example motorized rollers.

The baling machine described in this patent does not allow bales to be obtained in an optimal manner given the choice of belts that are interrupted at the gates.

Patent EP 0161726 discloses a baling machine for sarmenta, comprising a collection group mounted at the front onto the frame of the machine and a compacting chamber mounted onto the frame behind the collection group to receive the sarmenta from the collection group and form them into a bale. There is a gate formed from a single wing hinged to the frame that is able to open for the bale to come out. Inside the compacting chamber there is a first series of rollers mounted on the gate and a second series of rollers mounted on a mobile frame that moves during the formation of the bale.

### Presentation of the invention

In this situation, the problem forming the basis of the present invention is therefore to eliminate the problems of the prior art quoted above, by providing a baling machine for sarmenta, which has a low bulk to work between the rows of multiple plantations and in particular also plantations of limited height like for example vineyards for table grapes.

A particular purpose of the present invention is to provide a baling machine for sarmenta, which is suitable for feeding a foreseen compacting chamber in an optimal manner.

Another purpose of the present invention is to provide a baling machine for sarmenta, which is suitable for treating sarmenta formed from relatively thick branches, up to 7 cm in diameter.

Another purpose of the present invention is to provide a baling machine for sarmenta, which is suitable for treating sarmenta formed from fresh branches that have just been cut and therefore are particularly tough.

Another purpose of the present invention is to provide a baling machine for sarmenta, which is simple and cost-effective to make and operatively completely reliable.

### Brief description of the drawings

The technical characteristics of the finding, according to the aforementioned purposes, can clearly be found in the content of the claims given below and the advantages thereof will become clear in the following detailed description, made with reference to the attached drawings, which represent an embodiment thereof, purely as an example and not for limiting purposes, in which:
- figure 1 shows an overall front perspective view of the baling machine for sarmenta according to the invention;
- figure 2 shows an overall rear perspective view of the machine of figure 1;
- figure 3 shows an overall front view of the machine of figure 1;
- figure 4 shows an overall side view of the machine of figure 1;
- figures 5 and 6 show two side views of the machine of figure 1, with some parts removed to better highlight others and with a rear gate in closed position;
- figures 7 and 8 respectively show a rear perspective view and a side view of the machine of figure 1 with some parts removed to better highlight others and with the rear gate in open position;
- figure 9 shows a further side view of the machine of figure 1, with some parts removed to better highlight a detail of the machine relating to a collection group;

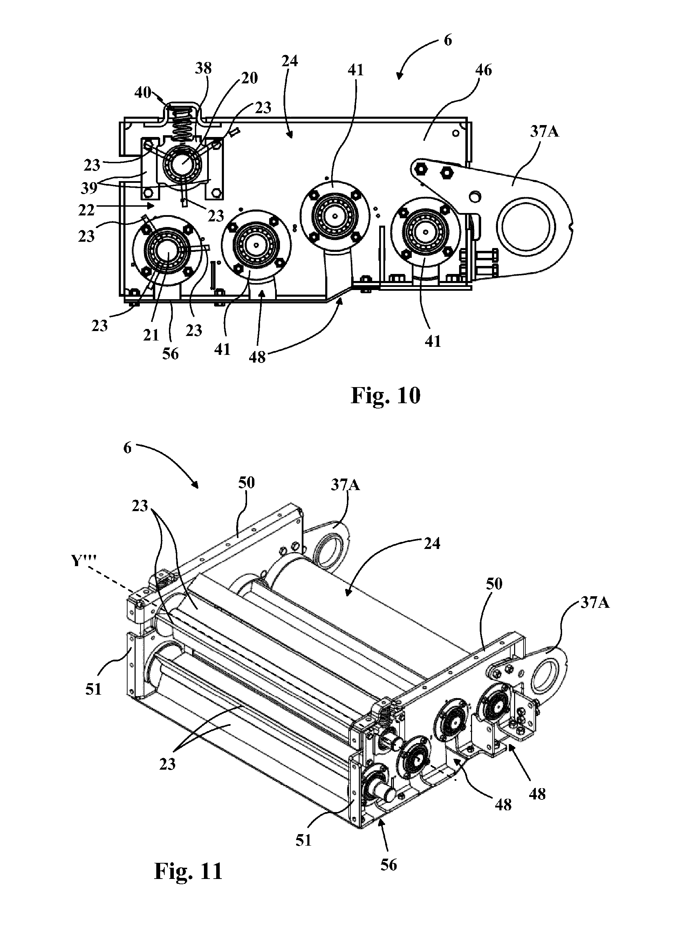

- figures 10 and 11 respectively show a side view and a perspective view from above of the collection group of the machine.

### Detailed description of a preferred example embodiment

With reference to the attached drawings, a possible and advantageous embodiment of a baling machine for sarmenta, according to the present invention, has been wholly indicated with 1.

By the term "sarmenta" hereafter we mean to indicate all of the possible branches of plantations or in any case vegetation having a thickness of up to 7 cm and that usually lie on the ground after pruning operations.

Such sarmenta are indeed generally the result of pruning operations of fruit trees, such as peach trees, hazel groves, olive groves and fruit trees in general and in particular vineyards.

The baling machine 1 is arranged to be hauled by a tractor, not represented in the attached figures, and is actuated through a transmission connected to the usual power take off of the tractor itself and/or by an equally usual hydraulic circuit present on the tractor for moving linear actuators or hydraulic motors, which will be specified hereafter.

For this purpose, the baling machine 1 is provided with a frame 2, which extends frontally with an articulated drawbar 3 provided with means 28 for fastening to the tractor, like for example a towing eye or, preferably, an attachment fork.

The frame 2 rests on the ground through two side wheels 4, which can optionally be easily replaced with two driving rollers 5, as will be specified more clearly hereafter.

The frame 2 frontally supports a collection group 6 suitable for collecting the sarmenta from the ground.

The baling machine 1 also comprises, in a per sé totally conventional manner, a compacting chamber 7, which is mounted on the frame 2 behind the collection group 6, from which it receives the sarmenta during the forward movement of the machine 1.

The compacting chamber 7 is delimited by a plurality of motorised pressing rollers 8 mounted circumferentially inside it, which can each be set in rotation about its own axis of extension Y, substantially perpendicular to the direction of forward movement X of the machine 1, to form, in a way that is per sé known to a man skilled in the art and hence not described in detail, the bale with the collected sarmenta.

The sarmenta introduced into the compacting chamber 7 are pulled and set in rotation by the pressing rollers 8. For this purpose, the outer circumferential surface of the pressing rollers 8 is advantageously provided with gripping means, comprising for example indentations or a plurality of blades fixed longitudinally on the outer surface of the pressing rollers 8 and projecting in the radial direction from it, which are suitable for promoting gripping onto the sarmenta, so that they are more easily set in rotation by the rollers 8.

The sarmenta flow thanks to the forward movement of the machine 1 with continuity into the compacting chamber 7 and increasingly fill the chamber itself. There is thus a compacting of a first core of sarmenta set in rotation on itself by the pressing rollers 8 arranged on the bottom of the compacting chamber 7. As the compacting chamber 7 is progressively fed, the size of the initial core increases, which involves a progressively increasing number of pressing rollers 8 until the compacting chamber 7 is completely filled. When this happens, all of the pressing rollers 8 are used to set the bale in rotation, which is then bound before expulsion from the compacting chamber 7.

There are one or more sensors, usually pressure sensors, which determine the end of the formation step of the bale and the start of the binding step in which a suitable binding group releases a cord, or a mesh, which circumferentially wraps one or more times around the bale before being cut by a suitable blade.

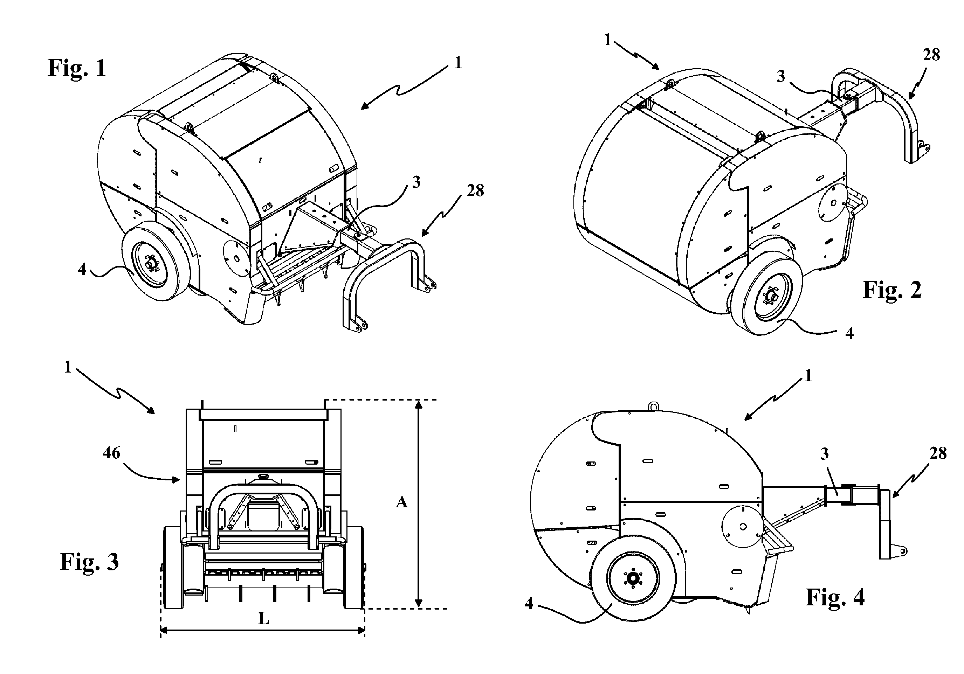

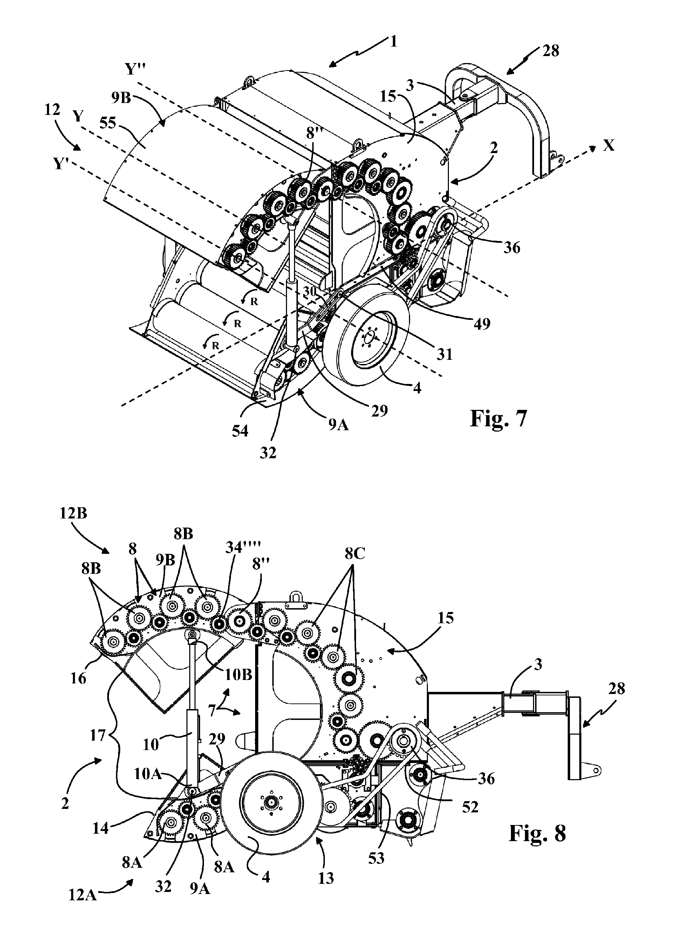

For the expulsion of the formed and bound bale there are gate means 9 mounted on the frame 2, behind the compacting chamber 7 and able to be moved through first actuator means 10 between a closed position 11 (Figures 1-6 and 9), in which they hold the bale inside the compacting chamber 7 during its formation, and an open position 12 (Figures 7 and 8), in which they allow the bale to pass out from the compacting chamber 7.

In accordance with the idea forming the basis of the present invention, the aforementioned gate means 9 comprise at least one first gate 9A, hinged to a lower portion 13 of the frame 2 and provided with a first free edge 14, and a second gate 9B, which is positioned above the first gate 9A, is hinged to an upper portion 15 of the frame 2 and is provided with a second free edge 16.

Advantageously, the first and second gate 9A and 9B are respectively hinged between first brackets 37A, fixed protruding through screws to the lower portion 13 of the frame 2 and facing towards the back of the machine 1, and between second brackets 37B, fixed protruding through screws to the upper portion 15 of the frame 2 and facing towards the back of the machine 1.

The two gates 9A and 9B are actuated to move by the first actuator means 10 between respective coupling positions 11A and 11B, at the closed position 11 of the gate means 9 (Figures 1-6 and 9), in which the free edges 14 and 16 of the two gates 9A and 9B are joined together to close the compacting chamber 7, and respective decoupling positions 12A and 12B (Figures 7 and 8), at the open position 12 of the gate means 9, in which the free edges 14 and 16 of the two gates 9A and 9B are spaced apart defining a passage channel 17 between them for the formed and bound bale to pass through.

In greater detail, the first actuator means 10 are obtained with at least one first linear actuator mechanically connected, for example through hinges, with a first end thereof 10A to the first gate 9A, and with its second end 10B to the second gate 9B. Preferably, the first linear actuators for moving the two doors 9A and 9B are two in number, each of which is mounted on an outer side of the machine 1 between the first gate 9A and second gate 9B.

In accordance with a preferred embodiment of the machine 1 illustrated in the attached figures, the first gate 9A is also connected to the frame 2 through at least one tie rod 29 provided with a slot 30, which defines an end stop of the first gate 9A opening towards the decoupling position 12A. Preferably, there are two tie rods 29 and they are each mounted on an outer side of the machine 1 between the first gate 9A and the frame 2.

In greater detail, the tie rod 29 is hinged at one extremity thereof to the first gate 9A and carries, slidably inserted in the slot 30, a first pin 31 fixed to the frame 2. In particular, the tie rod 29 is hinged to the first gate 9A through a second pin 32 fixed to the latter, to which the first end 10A of the linear actuator is also connected.

The two gates 9A and 9B have an arched extension and contribute, when they are in the coupling positions 11A and 11B, to defining the compacting chamber 7. For this purpose, the pressing rollers 8 are in part distributed on the inner wall of the two gates 9A and 9B, mounted circumferentially inside the compacting chamber 7. In greater detail, at least one first group of pressing rollers 8A is mounted on the first gate 9A along a first arc and at least one second group of pressing rollers 8B is mounted on the second gate 9B along a second arc.

Advantageously, a third group of pressing rollers 8C is mounted along a third arc on the frame 2 of the machine 1, in particular on the upper portion 15 thereof, and frontally delimits the compacting chamber 7. In greater detail, the rollers of the third group of pressing rollers 8C are mounted on the frame 2 also to form an arc, which is substantially contiguous to the arcs defined by the rollers of the first group of pressing rollers 8A on the first gate 9A and by the rollers of the second group of pressing rollers 8B on the second gate 9B, and substantially forms a circumference with them, when the first and second gate 9A and 9B are in the respective coupling positions 11A and 11B, with the rollers distributed substantially uniformly on it.

In accordance with a preferred embodiment of the machine 1 illustrated in the attached figures, a first connecting pressing roller 8' is mounted at the hinging axis Y' of the first gate 9A on the frame 2.

More specifically, such a first connecting pressing roller 8' is mounted near to a first engagement edge 18 of the first gate 9A, arranged at the other end of the arched extension of the first gate 9A with respect to the first free edge 14 thereof, and between the first brackets 37A of the frame 2.

Similarly, a second connecting pressing roller 8" is mounted at the hinging axis Y" of the second gate 9B on the frame 2.

More specifically, such a second connecting pressing roller 8" is mounted near to a second engagement edge 19 of the second gate 9B, arranged at the other end of the arched extension of the second gate 9B with respect to the second free edge 16 thereof, and between the second brackets 37B of the frame 2.

The machine 1 comprises transmission means 33, suitable for connecting to the power take off of the tractor to transmit the rotation motion to the pressing rollers 8. In particular, the transmission means 33 set the pressing rollers 8 in rotation in the same direction R, so that the pressing rollers 8 jointly define a direction of rotation S of the sarmenta inside the compacting chamber 7.

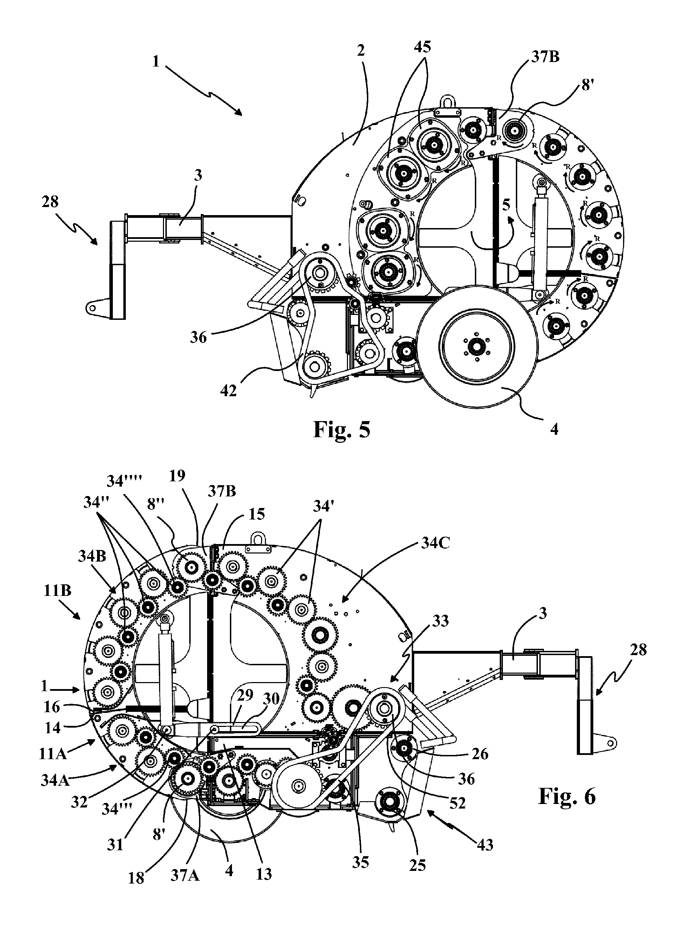

The direction of rotation R is defined as the direction of rotation of the pressing rollers 8 for which the portions of the outer circumferential surfaces of the rollers mounted on the first gate 9A that face towards the inside of the compacting chamber 7 move forward towards the first free edge 14 of the first gate 9A, as illustrated in figure 7. More clearly, the direction of rotation R of the rollers 8 appears anticlockwise to an observer looking at the left side 46 of the machine 1, illustrated in Figures 6 and 8, where by left side 46 we mean the side of the machine 1 to the left of an observer looking at the machine 1 from the front side, intended to be connected to the tractor.

The transmission means 33 are able to transmit the rotation motion to the first and to the second group of pressing rollers 8A and 8B even when the first and second gate 9A and 9B are in the respective decoupling positions 12A and 12B, to promote the expulsion of the bale from the compacting chamber 7. The first group of pressing rollers 8A, indeed, by rotating in the direction of rotation R when the first and second gate are in the respective decoupling positions, as indicated in figure 7, push the formed bale out from the first gate 9A and away from it and from the work area of the machine 1.

Advantageously, the transmission means comprise at least one plurality of gears connected in succession along the circumference defined by the pressing rollers 8 that delimit the compacting chamber 7.

In particular, the transmission means 33 comprise a transmission shaft 36, which is able to be connected to the power take off of the tractor and is rotatably mounted on the frame 2 transversally to the direction of forward movement X of the machine 1. A first plurality of gears 34A transmits the motion received from the transmission shaft 36 to the first group of pressing rollers 8A, mounted on the first gate 9A, and a second plurality of gears 34B transmits the motion from the transmission shaft 36 to the third group of pressing rollers 8C mounted on the frame 2 and to the second group of pressing rollers 8B mounted on the second gate 9B. In greater detail, the motion is transmitted from the transmission shaft 36 to the second plurality of gears 34B directly and to the first plurality of gears 34A through a first chain or transmission belt 35.

The first and second plurality of gears 34A and 34B are defined by a plurality of driving gear wheels 34', each of which is axially fixed to an end of one of the pressing rollers 8 to set it in rotation, and by a plurality of transmission gear wheels 34" mounted idly respectively on the lower portion 13 of the frame 2 and on the first gate 9A as far as the first plurality of gears 34A is concerned and on the upper portion 15 of the frame 2 and on the second gate 9B as far as the second plurality of gears 34B is concerned. The transmission gear wheels 34" are suitable for transmitting the motion from one driving gear wheel 34' to the next one with which they are engaged and thus from one pressing roller 8 to the next one, starting from the transmission shaft 36.

Functionally, in the opening of the gate means 9, the first actuator means 10 firstly command the descent of the first gate 9A. Such a descent of the first gate 9A is promoted by the weight of the gate itself 9A, which is hinged to the frame 2 with its first engagement edge 18, so as to extend canti-levered from the frame 2 when it is progressively moved from the coupling position 11A to the decoupling position 12A.

Advantageously, moreover, the weight of the bale bears down at least in part on the first gate 9A, tending to promote its downward opening rotation until its first free edge 14 is near to the ground.

During the movement of the first gate 9A from the coupling position 11A to the decoupling position 12A, a first end gear wheel 34"' of the aforementioned plurality of transmission gear wheels 34"mounted on the first gate 9A near to the engagement edge 18 thereof rotates on the driving gear wheel 34' fixed to the first connecting pressing roller 8' advantageously mounted between the first brackets 37A, remaining engaged with it. This allows the transmission of the motion through the first plurality of gears 34A up to the rollers of the first group of pressing rollers 8A also during the movement of the first gate 9A and when the first gate 9A is in the decoupling position 12A.

The opening rotation of the first gate 9A is stopped when the first pin 31, which runs along the slot 30 of the tie rod 29 reaches the extremity of the slot 30.

Once the first gate 9A has been lowered, the first actuator means 10 command the lifting of the second gate 9B. Such lifting of the gate 9B preferably takes place when the first gate 9A has reached the end stop towards the decoupling position 12A defined by the tie rod 29.

When the machine 1 works on particularly soft or irregular ground, it may be that the wheels 4 of the machine sink further into the ground and that the first gate 9A, in the decoupling position 12A, ends up resting on the ground, which acts as a contrast element for the lengthening of the first actuator means 10 that command the lifting of the second gate 9B.

The fact that the first gate 9A, with its first free edge 14, comes near to the ground improves the stability of the machine 1 during the discharging of the formed bale, since possible oscillations of the machine 1 are damped by the contact of the first free edge 14 of the first gate 9A with the ground.

The second gate 9B is hinged to the frame 2 with its second engagement edge 19, so as to extend canti-levered from the frame 2 when it is progressively moved from the coupling position 11B to the decoupling position 12B.

During the movement of the second gate 9B from the coupling position 11B to the decoupling position 12B, a second end gear wheel 34"" of the aforementioned plurality of transmission gear wheels 34", mounted on the second gate 9B near to the second engagement edge 19 of the latter rotates on the driving gear wheel 34' fixed to the second connecting pressing roller 8" advantageously mounted between the second brackets 37B, remaining engaged with it. This allows the transmission of the motion through the second plurality of gears 34B up to the rollers of the second group of pressing rollers 8B even during the movement of the second gate 9B and when the second gate 9B is in the decoupling position 12B.

In accordance with the present invention, the relative movement of the two gates 9A and 9B makes it possible to define the passage channel 17 of the bale even with modest rotations of the two gates 9A and 9B and thus with a very modest lifting of the second gate 9B above the compacting chamber 7 of the machine 1.

In accordance with an advantageous characteristic of the present invention, the collection group 6 comprises a pair of motorised counter-rotating conveying rollers, one upper 20, and one lower 21, mounted on the frame 2 substantially one on top of the other and transversally to the direction of forward movement X of the baling machine 1.

The two conveying rollers 20, 21 define a gap 22 for the sarmenta to pass through between them.

Each conveying roller 20, 21 carries at least two peripherally-mounted blades 23 (and in particular advantageously three blades 23) that extend along its longitudinal extension Y"' that insert during the rotation of the rollers 20, 21 between the blades 23 of the other conveying roller 21, 20.

The blades 23 have a sharp edge suitable for cutting the branches along their extension so as to form facilitated bending points on them suitable for promoting the conveying of the branches themselves towards the compacting chamber 7. Furthermore, the blades 23 with their rotation push the sarmenta that pass through the gap 22 towards the compacting chamber 7.

Preferably, at least one of the two conveying rollers, and preferably the upper one 20, is mounted on the frame 2 through a mobile support 38, which can slide with respect to the frame 2 thanks to a guide 39. Elastically yielding means 40 mounted on the frame 2 act on the mobile support 60 to push it towards an end stop close to the other lower conveying roller 21. If the two conveying rollers 20, 21 are pushed apart by the sarmenta that pass through their gap 22 with a force greater than a predetermined value, the upper roller 20 overcomes the antagonist elastic force of the elastically yielding means 40 and moves away from the lower roller 21, increasing the gap 22 and hence promoting the passage of the sarmenta without flooding the machine 1.

The collection group 6 also advantageously comprises a motorised roller unit 24 operatively connected to the conveying rollers, which is mounted on the frame 2 alongside the back of the aforementioned pair of conveying rollers 20, 21 and is formed from a plurality of conveying rollers 41, rotating in the same direction, parallel to one another and to said conveying rollers 20, 21. The aforementioned conveying rollers 41 are suitable for receiving the sarmenta from the two conveying rollers 20, 21 and directing them inside the compacting chamber 7 through a front opening thereof 61, at a front section thereof without pressing rollers 8. Advantageously, the upper conveying roller 20 is arranged slightly withdrawn with respect to the lower conveying roller 22 to direct the sarmenta slightly downwards in the direction of the roller unit 24.

Preferably, the conveying rollers 20, 21 and the roller unit 24 of the collection group 6 are mounted on a first support framework 46, fixed beneath the upper portion 15 del frame 2 and at least partially defining the lower portion 13 thereof. The first brackets 37A are advantageously fixed to the first support framework 46 of the collection group 6.

In front of the collection group 6, and in particular of the pair of conveying rollers 20, 21, a lower collecting roller 25 is preferably mounted on the frame 2 parallel to the conveying rollers 20, 21 peripherally provided with prongs, blades or projecting teeth able to collect the sarmenta from the ground and direct them towards the pair of conveying rollers 20, 21 behind.

Furthermore, there is advantageously an upper collecting roller 26, mounted on the frame 2 above the lower collecting roller 25 and parallel to it. Such an upper collecting roller 26 is also peripherally provided with prongs, blades or projecting teeth able to direct the fronds and the sarmenta farther up towards the gap of the pair of conveying rollers 20, 21 behind.

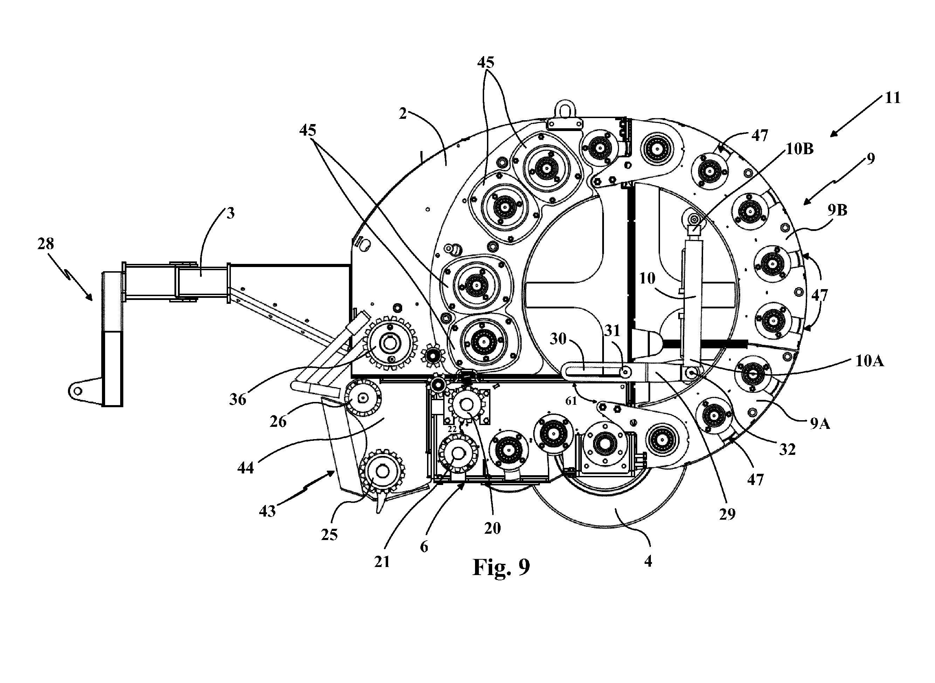

Advantageously, the lower collecting roller 25 and the upper collecting roller 26 are mounted on a second support framework 44, which is fixed beneath the upper portion 15 of the frame 2 at frontally to the first support framework 44 of the collection group 6, as can be clearly seen in figure 9. The second support framework 44 contributes to defining, together with the first support framework 46, the lower portion 13 of the frame 2.

The machine 1 preferably comprises conveying means 43, mounted in front of the frame 2 and suitable for conveying the sarmenta towards the collecting rollers. In greater detail, the conveying means 43 are advantageously mounted at the sides of the second support framework 44 of the lower and upper collecting rollers 25, 26 and project from the front thereof, to promote the directing of the sarmenta towards the work area of the collecting rollers. The conveying means 43 comprise, for example, a pair of arched shields as illustrated in the attached figures, or a pair of brushes or a pair of counter-rotating conveying rollers, suitable for rotating around a substantially vertical axis and provided with a plurality of whips able to hit the sarmenta during the rotation of the conveying rollers to direct them towards the work area of the collecting rollers.

In accordance with a preferred characteristic of the present invention, the conveying rollers 20, 21, and preferably also the lower and upper collecting rollers 25, 26, are set in rotation by the transmission shaft 36 connected to the power take off of the tractor through a second chain or transmission belt 42.

Otherwise, the conveying rollers 20, 21 can be actuated to rotate by a hydraulic motor, in particular fed by the pressurised oil circuit produced by a hydraulic pump mounted on the tractor machine. The aforementioned hydraulic motor is mechanically connected through transmission means to the shafts of the conveying rollers 20, 21. Such a hydraulic motor is of the type that can be inverted in its rotation and therefore is able to set the two rollers 20, 21 in counter-rotation at the same speed in two opposite directions of counter-rotation. With the hydraulic motor rotating in a first direction the two conveying rollers 20, 21 are actuated to rotate in counter-rotating directions suitable for directing the sarmenta towards the compacting chamber 7, whereas with the hydraulic motor rotating in a second direction, opposite the first, the two conveying rollers 20, 21 are actuated to rotate in counter-rotating directions suitable for expelling the sarmenta towards the front part of the machine 12 to free the conveying rollers 20, 21 from the sarmenta, in the case of them flooding the collection group 6.

Advantageously, the machine 1 comprises means for adjusting the height of the wheels 4 with respect to the frame 2, which allow the working height of the frame 2 to be adjusted with respect to the ground on which the machine rests through the wheels 4. The adjustment means allow the frame 2 to be moved between at least one lowered position, in which the frame 2 is lowered on the wheels 4 and the lower portion 13 of the frame 2 is close to the ground, so that the lower collecting roller 25 hugs the ground and easily collects the sarmenta that lie on it, and at least one raised position, in which the frame 2 is lifted with respect to the wheels 4 and the lower portion 13 of the frame 2 is arranged a greater distance from the ground. The frame 2 is advantageously arranged in a raised position with respect to the wheels 4 when for example the machine 1 has to be transported on the road or when it has to work on particularly irregular and uneven ground, in order to avoid the bottom of the frame 2 and the lower collecting roller 25 hitting the ground when the machine 1 is moved forward.

In accordance with a further embodiment of the machine 1, not illustrated, there are second actuator means, in particular obtained with second linear actuators, mounted beneath the frame 2 connected to lifting feet able to lift the machine 1 from the ground to replace the side wheels 4 with advancing rollers to be mounted on axles arranged under the frame 2, i.e. under the first gate 9A.

The advancing rollers do not project laterally from the frame 2 of the machine 1, allowing the width of the latter to be reduced and facilitating its passage through the rows of plantations.

Advantageously, the upper portion 15 of the frame 2 carrying, mounted on it, the third group of pressing rollers 8C, the first support framework 46 of the collection group 6, the second support framework 44 of the lower and upper collecting rollers 25 and 26, and the first and second gate 9A and 9B can be easily assembled and disassembled through mutual fastening means.

In particular, the assembly means comprise two first longitudinal fastening flanges 49 of the upper portion 15 of the frame 2, two second longitudinal flanges 50 and two front flanges 51 of the first support framework 46 of the collection group 6, two third longitudinal flanges 52 and two rear flanges 53 of the second support framework 44, which supports the lower and upper collecting rollers 25 and 26, and the first and second connection brackets 37A and 37B of the first gate 9A and second gate 9B, respectively, to the frame 2, as explained better hereafter.

In greater detail, the upper portion 15 of the frame 2 is provided with two longitudinal first fastening flanges 49, which extend on the two outer sides of the machine, each along a lower edge of the upper portion 15 of the frame 2.

The first support framework 46 of the collection group 6 is provided with second longitudinal flanges 50, which extend on the two outer sides of the machine 1, each along an upper edge of the first support framework 46, and with two front flanges 51, which each extend along a front edge of the first support framework 46 also on the two outer sides of the machine 1.

The second support framework 44, which supports the lower and upper collecting rollers 25 and 26, is provided with third longitudinal flanges 52, which extend on the two outer sides of the machine 1, each along an upper edge of the second support framework 44, and with two rear flanges 53, which each extend along a rear edge of the second support framework 44 also on the two outer sides of the machine 1.

The first support framework 46 and the second support framework 44 are thus easily assembled through a plurality of screws that fix together the two front flanges of the first framework 46 and the two rear flanges of the second framework 44.

Moreover, the first support framework 46 is easily assembled to the upper portion 15 of the frame 2 through a plurality of screws that fix the two second longitudinal flanges 50 of the first support framework 46 to a rear section of the first longitudinal fastening flanges 49 of the upper portion 15 of the frame 2. The second support framework 44 is easily assembled to the upper portion 15 of the frame 2 through a plurality of screws that fix the two third longitudinal flanges 52 of the second support framework 44 to a front section of the first longitudinal fastening flanges 49 of the upper portion 15 of the frame 2.

The first and the second gate 9A and 9B are advantageously assembled, respectively, to the lower portion 13 and to the upper portion 15 of the frame 2 through the attachment, preferably through a plurality of screws, of the first brackets 37A and of the second brackets 37B between which the first and the second connecting pressing roller 8' and 8" are mounted, respectively, at the lower portion 13 and at the upper portion 15 of the frame 2.

The mounting and dismounting operations of the machine 1, as well as the maintenance or replacement of parts of the machine 1 are therefore particularly easy, since each of the parts of the machine 1 quoted above, i.e. the upper portion 15 of the frame 2, the collection group 6, the group consisting of the lower and upper collecting rollers 25 and 26, and the first and second gate 9A and 9B, can easily be separated from the others and can be removed or mounted independently. Moreover, the pressing rollers belonging to the third group of pressing rollers 8C are advantageously mounted in a removable manner on the frame 2 and can be easily removed/remounted from/onto the frame 2. In greater detail, each of the rollers of the third group of pressing rollers 8C carries, mounted at an end thereof, a fastening plate 45, fixed to the frame 2 on an outer side of the machine 1 for example through a plurality of bolts, and, at the other end, a driving gear wheel 34' mounted on the opposite outer side of the machine 1. In order to remove one of the rollers of the third group of pressing rollers 8C it is therefore sufficient to firstly remove the driving gear wheel 34', held on the shaft for example through a key, to remove the bolts that secure the fastening plate 45 to the frame 2 and to then withdraw the roller. The fact that the rollers of the third group of pressing rollers 8C are easily removable makes the maintenance interventions of the machine 1 object of the present invention even more simple and easy.

In order to allow the removal of the rollers belonging, respectively, to the first group of pressing rollers 8A and to the second group of pressing rollers 8B, on the side faces of the first gate 9A and of the second gate 9B there are advantageously a plurality of radial openings 47, each communicating with a respective seat of one of the pressing rollers 8. The first and second gate 9A and 9B are advantageously respectively provided with a first arched buffering wall 54 and with a second arched buffering wall 55, which jointly define the rear wall of the machine 1, when the first and second gate 9A and 9B are in the respective coupling positions, and are able to close the radial openings 47.

Similarly, in order to allow the removal of the rollers belonging to the collection group 6, on the first support framework 46 there are a plurality of first openings 48 formed on the side faces of the first framework 46 starting from the lower or front edge thereof and each communicating with the seat of a respective roller. The first framework 46 is advantageously provided with a lower buffering wall 56 able to close the bottom of the openings 48 formed from the lower edge of the side faces of the first framework 46.

In order to allow the removal of the rollers belonging to the lower and upper collectors 25, 26, on the second support framework 44 there are two pairs of front openings formed on the side faces of the second support framework 44 starting from the lower or front edge and each communicating with the seat of a corresponding collecting roller.

All of the movements connected to the collection, transportation, compacting of the sarmenta and forming of the bale, as well as to the movement of the collection group 6, are obtained through linkages connected to the power take off of the tractor through a cardan shaft that transmits the motion to the transmission shaft 36.

The movement of the gates 9A and 9B through the first actuator means 10, the movement of the lifting feet through the second actuator means and possibly also the rotation of the conveying rollers 20, 21 when commanded by a hydraulic motor, are carried out by hydraulic actuators connected to a pressurised hydraulic circuit that connects to a pump mounted on the tractor with interposition of a suitable drive distributor.

The machine 1 according to the present invention is equipped with a particularly low bulk.

In particular, for the same dimensions of the bale produced, the machine 1 in accordance with the present invention has a lower bulk with respect to known baling machines.

In a preferred embodiment, the machine 1 is equipped with a height A of less than 180 cm and a width L of less than 170 cm.

The baling machine for sarmenta thus conceived therefore achieves the preset purposes.

Of course, it can, in its practical embodiment, also take up different shapes and configurations from the one illustrated above without for this reason departing from the present scope of protection.

Moreover, all of the details can be replaced by technically equivalent elements and the sizes, shapes and the materials used can be whatever according to requirements.

## Claims

1. Baling machine for sarmenta, comprising a support frame (2) intended to be hauled by a tractor, a collection group (6) mounted at the front on said frame (2) and able to collect the sarmenta from the ground; a compacting chamber (7) mounted on said frame (2) at the back of said collection group (6), suitable for receiving said sarmenta from said collection group (6) and for forming them in a bale, gate means (9) mounted on said frame (2) behind said compacting chamber (7) able to be moved, through first actuator means (10), between a closed position (11), in which they hold said bale inside said compacting chamber (7) during its formation, and an open position (12), in which they allow the expulsion of said bale outside of said compacting chamber (7);
**characterised in that** said gate means (9) comprise at least one first gate (9A) hinged to a lower portion (13) of said frame (2) and provided with a first free edge (14) and a second gate (9B), above the first (9A), hinged to an upper portion (15) of said frame (2) and provided with a second free edge (16); said first and second gate (9A, 9B) being moved by said first actuator means (10) between a coupling position (11A, 11B), at said closed position (11) of said gate means (9), in which said first and second free edges (14, 16) are joined to close said compacting chamber (7), and a decoupling position (12A, 12B) at said open position (12) of said gate means (9), in which said first and second free edges (14, 16) are spaced apart forming a passage channel (17) for said bale to pass through;
said baling machine comprising a plurality of motorised pressing rollers (8) mounted circumferentially inside said compacting chamber (7) and each able to be set in rotation about its own axis of extension (Y) for the formation of said bale; at least one first group of pressing rollers (8A) being mounted on said first gate (9A) along a first arc; at least one second group of pressing rollers (8B) being mounted on said second gate (9B) along a second arc; at least one third group of pressing rollers (8C) being mounted on said frame (2) along a third arc; the arcs of said first, second and third group of pressing rollers (8A, 8B and 8C) forming substantially a circumference with the arcs contiguous, when the first and second gate (9A and 9B) are in said coupling positions (11A and 11B).

2. Baling machine according to claim 1, **characterised in that** it comprises transmission means (33), which comprise a transmission shaft (36), rotatably mounted on the frame 2 and suitable for connecting to the power take off of said tractor, and at least one plurality of gears (34A, 34B), mounted on said frame (2), on said first gate (9A) and on said second gate (9B) and connected to said transmission shaft (36) and in succession along the circumference defined by the pressing rollers (8) that delimit said compacting chamber (7) to transmit the rotation motion to said pressing rollers (8), said transmission means (33) being able to transmit the rotation motion to said first and second group of pressing rollers (8A, 8B) even when said first and second gate (9A, 9B) are in said decoupling position (12A, 12B), to promote the expulsion of said bale from said compacting chamber (7)

3. Baling machine according to claim 2, **characterised in that** said plurality of gears (34A, 34B) comprises a plurality of driving gear wheels (34'), each of which is fixed axially to one of said pressing rollers (8) to set it in rotation, and a plurality of transmission gear wheels (34") mounted idly on said first gate (9A), on said second gate (9B) or on said frame (2) and suitable for transmitting the motion from one driving gear wheel (34') to the next, with which they are engaged.

4. Baling machine according to claim 1, **characterised in that** said first actuator means (10) comprise at least one first linear actuator connected at a first end (10A) to said first gate (9A) and at the second end (10B) to said second gate (9B).

5. Baling machine according to claim 4, **characterised in that** there are two first linear actuators mounted on the outer sides of said first and second gate (9A, 9B).

6. Baling machine according to claim 1, **characterised in that** said first gate (9A) is also connected to said frame (2) through at least one tie rod (29) provided with a slot (30) onto which a first pin (31) is slidably inserted, fixed to said frame (2), said slot (30) defining an end stop for said first gate (9A) opening towards said decoupling position (12A).

7. Baling machine according to claim 1, **characterised in that** said collection group (6) comprises a pair of motorised counter-rotating conveying rollers, mounted on said frame (2) substantially one on top of the other, transversally to the direction of forward movement (X) of said baling machine (1), each carrying at least two peripherally-mounted blades (23) that extend along the longitudinal extension of said conveying rollers and that are inserted by rotating between the blades (23) of the other conveying roller, said blades (23) pulling said sarmenta towards said compacting chamber (7) and cutting the branches thereof with bending points.

8. Baling machine according to claim 7, **characterised in that** it comprises at least one collecting roller (25, 26) mounted at the front of said frame (2) peripherally provided with prongs, with blades or with projecting teeth able to collect said sarmenta from the ground and direct them towards said pair of conveying rollers.

9. Baling machine according to claim 7, **characterised in that** at least one roller of said pair of conveying rollers (20, 21) is mounted in a guided fashion on said frame (2) through a mobile support (60), on which elastically yielding means (40) act, mounted on said frame (2) to push them towards the other conveying roller.

10. Baling machine according to claim 1, **characterised in that** it comprises at least one connecting pressing roller (8', 8") mounted at the hinging axis (Y', Y") of at least one from said first gate (9A) and said second gate (9B) on said frame (2).

11. Baling machine according to claims 3 and 10, **characterised in that** a first end gear wheel (34"') of said plurality of transmission gear wheels (34"), mounted on said first gate (9A) near to a first engagement edge (18) of the latter, is able to rotate on the driving gear wheel fixed to a first connecting pressing roller (8'), mounted at the hinging axis (Y') of said first gate (9A) on said frame (2), remaining engaged with it, during the movement of said first gate (9A) from said coupled position (11A) to said decoupled position (12A).

12. Baling machine according to claims 3 and 10, **characterised in that** a second end gear wheel (34"") of said plurality of transmission gear wheels (34"), mounted on said second gate (9B) near to a second engagement edge (19) of the latter, is able to rotate on the driving gear wheel fixed to a second connecting pressing roller (8"), mounted at the hinging axis (Y") of said second gate (9B) on said frame (2), remaining engaged with it, during the movement of said second gate (9B) from said coupled position (11B) to said decoupled position (12B).

13. Baling machine according to claim 8, **characterised in that** said collection group (6) is provided with a first support framework (46), fixed beneath said upper portion (15) of said frame (2) and said at least one collecting roller (25, 26) is mounted on a second support framework (44), fixed beneath said upper portion (15) of said frame (2) and at the front of said first support framework (46) of said collection group (6), said first support framework (46) and said second support framework (44) jointly defining said lower portion (13) of said frame (2), said upper portion (15) of said frame (2), said first support framework (46), said second support framework (44) and said first and second gate (9A and 9B) being provided with fastening means to be assembled and disassembled from one another.

14. Baling machine according to claim 1, **characterised in that** a third group of pressing rollers (9C) is mounted on said frame (2) and frontally defines said compacting chamber (7), each of the rollers of said third group of pressing rollers (8C) carries a fastening plate (45) mounted at one of its ends, said plate being fixed to the frame (2) on an outer side of said machine (1) through a plurality of bolts and able to be removed to allow the corresponding roller to be withdrawn from its seat.
